# EUROPEAN PATENT APPLICATION

(11) **EP 1 496 702 A2**
(43) Date of publication of application: **12.01.2005**
(21) Application number: 04014755.5
(22) Date of filing: 23.06.2004
(51) Int. Cl.: H04N 7/18, H04N 5/232, G08B 15/00

(54) **Virtual joystick system for controlling the operation of security cameras and controlling method thereof**

(30) Priority: 24.06.2003 KR 2003040915
(71) Applicant: Sungjin C&C Co.,LTD., Seoul, 153-802 (KR)
(72) Inventor: Lim, In-Keon, Seoul, 137-049 (KR); Lee, Yeon-Jung, Seoul, 137-049 (KR); Kim, Dae-Joong, Jangan-gu Suwon City Gyeonggi-do,440-320 (KR)
(74) Representative: Eisenführ, Speiser & Partner

(57) **Abstract**

The present invention discloses a control technology for remote control of security cameras, and more particularly, to a method of providing virtual Joystick environment as if Joystick was used on a computer, and system thereof. A selected region is set on a computer monitor.

According to the direction that a cursor is clicked on and dragged within the region, a rotary movement command to pan or tilt a camera at a remote place is generated. If a mouse wheel is rotatably pushed or pulled or the mouse is moved to an additional control region within the selected region, additional functions such as zoom-in/out and focus-in/out are performed.

Therefore, the present invention has an effect that a user can feel as if a virtual Joystick was manipulated by controlling movement of cameras in real time as a mouse is moved, while monitoring an image of a subject on a computer monitor.

## Description

### FIELD OF THE INVENTION

The present invention relates to a virtual joystick on the computer screen for remote controlling the motion of security cameras such as the rotation, panning, and tilting for changing the aiming angle as well as the lens control such as focusing and iris adjustment.

### BACKGROUND OF THE RELATED ART

Recently, digital video recorder (DVR) becomes very popular for the security and surveillance system for monitoring the security-required buildings such as financial institutions, public institutions and military facilities. More recently, a video security and surveillance system is constructed by integrating the security cameras in the PC-based DVR system.

Generally speaking, DVR system is constructed by connecting a plurality of security cameras to a single DVR. Images transmitted from the security cameras are compressed and stored in a hard disk. In the meanwhile, it is sometimes necessary for an operator, who is responsible for keeping eye on the monitor for security, to be able to control the motion of the camera such as rotating, panning, tilting, focusing, iris controlling, and zooming of the camera at his remote computer in order to carefully examine the suspicious area or to catch up the suspect.

In order to fulfill this requirement, there has been introduced in the market a keyboard with a joystick installed, which allows the operator to command the operation of the camera such as panning, tilting, zooming, and controlling of focus and/or iris simply by manipulating the joystick in his hand. The manipulation of the joystick is so convenient and swift for the control of the remote camera that the camera can quickly respond to the operator's intention and thereby capture the vivid images of a suspicious spot or a scene of crime

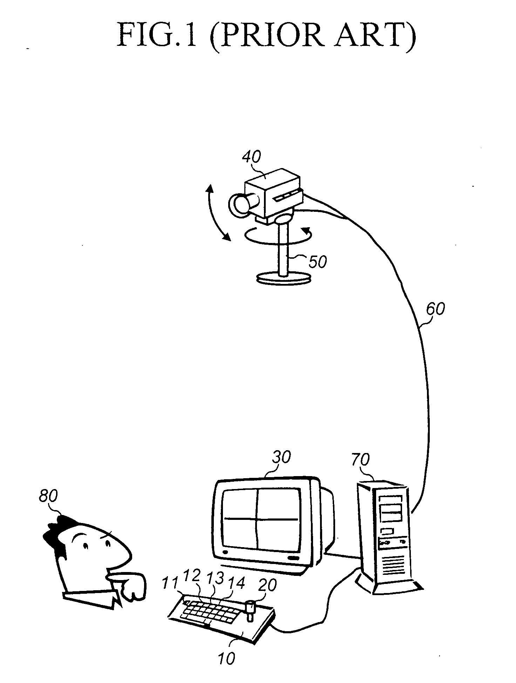

Fig.1 shows a schematic diagram of a security and surveillance system using a system keyboard having a joystick mounted thereon.

Referring to Fig.1, a security camera 40 is mounted on a mounting device 50, while it can be connected to a computer 70 at a serial interface such as RS-422, RS-485 and RS-232C. If the security camera 40 receives a command for motion from the computer 70, a motor (not shown) disposed in the mounting device 50 moves the mounting device 50 upward, downward, rightward and leftward, etc. As a consequence, the motor drives the orientation of the security camera 40 by exerting appropriate forces on a certain area of the mounting device 50 in order to make the camera lens to aim toward a target direction.

Here, the commands issued by the operator's 80 manipulation of the joystick at a remote place on the computer 70 can make the camera either panned on a horizontal plane or tilted on a vertical plane. Simple manipulation of the joystick can also control the preset function, the wiper function, the on/off control of the sensor as well as the zooming operation, the focusing operation and the iris control function of lens.

In order to remotely control the security camera 40 and the mounting device 50, however, the conventional technology usually relies on employing the above-mentioned system keyboard 10 having joystick 20 mounted thereon.

In other words, joystick 20 provides various kinds of manipulations such as pulling upward, downward, rightward and leftward, which makes the security camera 40 oriented toward the target direction in compliance with the operator's intention. At this time, the operator 80 can additionally perform the functions such as zooming, focusing and iris control either by moving or by twisting the joystick 20 while depressing a specific button 11, 12, 13 and 14 of the keyboard 10 with his left hand.

Despite the convenience of the joystick built on the keyboard, the prior art has a shortcoming because the conventional keyboard with joystick is very expensive. To resolve the foregoing problem, there has been proposed an approach which uses a graphic user interface (GUI) on a computer monitor 30 as a kind of joystick.

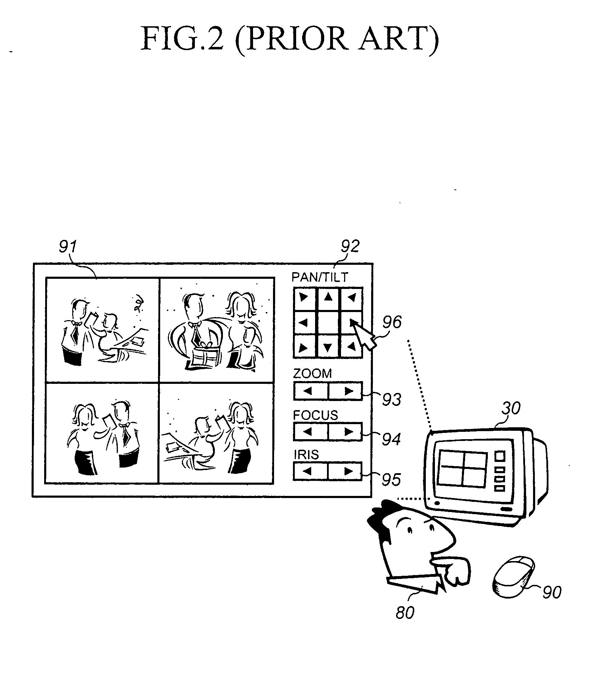

Fig.2 illustrates a typical graphic user interface for controlling the operation of security cameras according to a prior art. Referring to Fig.2, the operator 80 can interface control GUIs 92, 93, 94 and 95, which are displayed together with capture images 91 on the same monitor, with a mouse 90, while remotely monitoring the computer monitor 30 (this is also called "PTZ mode'') .

More precisely, the operator 80 can place a cursor 96 to a position on the GUI by manipulating the mouse 90 and thereafter issues an operation command by a click. If either a zoom-out function or a zoom-in function is required, the operator 80 can move the cursor 96 to a corresponding GUI 93 and then magnify and reduce a subject portion.

In the conventional technology shown in Fig.2, however, has a technical limit in a sense that it is very difficult to respond to the movement of the suspect because the control GUI for the control of the camera motion is far apart from the captured images. Let's suppose the operator is chasing the suspect on the computer monitor who is running away after the murder, for instance. The operator naturally keeps an eye on the suspect and wants to control the aiming direction of the security camera in order to chase the suspect. Furthermore, the operator wants to identify the face of the suspect by focusing and/or zooming in some cases. However, since the control GUI is inevitably located apart from the object that the operator is keeping eye on, it is really difficult to pace the cursor on the control GUI simultaneously watching the moving target in accordance with the prior art.

Namely, when the operator 80 at a remote place has to change the motion of the security camera as quickly as he can such as chasing a culprit; the operator has to locate the cursor 96 at a right position in the control GUI while he keeps eye on the moving target. Therefore, it is really difficult to place the cursor at the appropriate place in the control GUI while looking at the moving target simultaneously. Therefore, that is the technical limit of the prior art which can not be resolved without a real joystick on the keyboard.

That is, if the real joystick is used, the real joystick can be manipulated to any desired direction in 360° to control the direction of the camera and furthermore, additional functions (zoom, focus, etc.) can be performed at the same time by twisting Joystick or depressing buttons with the left hand. On the contrary, if the GUI of the prior art illustrated in Fig.2 is used, the cursor has to be located at a specific location and then clicked on it, using the mouse, which makes its use inconvenient.

### SUMMARY OF THE INVENTION

An object of the present invention is to provide a virtual joystick system which can control the motion of the security cameras without using a real joystick under a graphic user interface (GUI) provided on a computer monitor, and the system thereof.

Another object of the present invention is to provide a virtual joystick system in which a mouse on a computer screen is manipulated like a real joystick, and a controlling method thereof.

To accomplish the above objects, according to the present invention, the movement of the cursor on the screen is regarded like the movement of the joystick. In accordance with the invention, the control GUI region is predefined and is divided into a plurality (a total number of 360°/θ) of fan-shaped pieces (each with centric angle θ) in a radial direction wherein each piece represents a certain aiming angle of the security camera. By dragging the cursor from the location of a first piece to a second piece, the target direction of the security camera is switched. Furthermore, the moving speed of the security camera can be determined by the distance between the current location of the cursor and the reference point. Preferably, the focus control and/or the iris control can be accomplished by rolling the mouse button up and/or down at a certain piece. As another preferred embodiment of the invention, additional control GUI region can be defined for the control of lens.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

In the drawings:
Fig.1 is a schematic diagram illustrating a conventional security system using a system keyboard having a joystick mounted thereon.
Fig.2 shows a typical graphic user interface on a computer monitor for controlling the operation of security cameras according to a prior art.
Fig.3 shows a preferred embodiment of a monitor screen for performing a virtual joystick in accordance with the present invention.
Fig.4 shows another embodiment of a monitor screen having additional control GUI for control functions such as zoom-in/out in accordance with the present invention.

### DETAILED DESCRIPTION OF THE INVENTION

Reference will now be made in detail to the preferred embodiments of the present invention, examples of which are illustrated in the accompanying drawings.

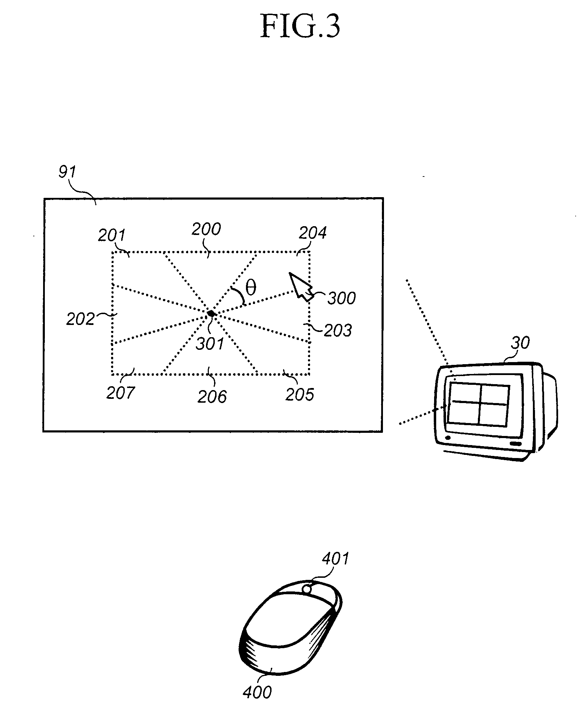

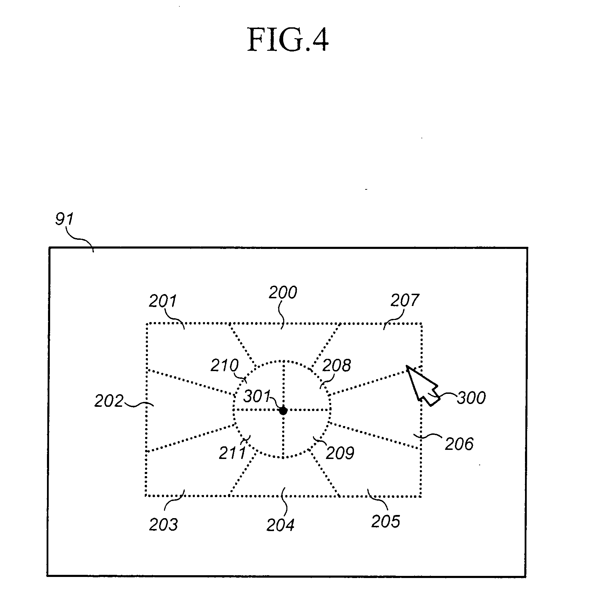

Virtual Joystick technologies according to the present invention will now be described in detail with reference to Fig.3 and Fig.4.

The present invention provides graphic user interface (GUI) environment wherein the security camera at a remote place is panned or tilted in accordance with the cursor movement if the cursor is clicked on and dragged within a specific control GUI region, while additional functions such as zoom-in/out and focus-in/out are performed by rolling a mouse wheel once the mouse is located in a particular location.

As another preferred embodiment in accordance with the present invention, additional control functions such as zoom-in/out and focus-in/out can be performed by pacing the cursor on an additionally-defined control GUI region on a monitor. Thus, if the cursor is located at the specific region, clicked on and dragged, the predefined additional functions are performed.

In this way, the operator can control the aiming direction of the security camera simply by moving the mouse in an arbitrary orientation (360°) simultaneously with keeping eye on the moving object displayed on a computer screen. Further, the operator can constantly keep an eye on the object while performing the additional control functions such as zoom-in/out and focus-in/out, as if manipulating the real joystick, if necessary.

In this context, the joystick function implemented on the computer screen is referred to as "virtual Joystick."

Fig.3 illustrates a preferred embodiment of a monitor screen for performing the virtual joystick function in accordance with the present invention.

The virtual joystick graphic user interface (GUI) environment in accordance with the present invention, control GUI regions (invisible) 200, 201, 202, 203, 204, 205, 206 and 207 are predefined on the captured images on the screen 91 of the computer monitor.

The predetermined GUI region is divided into a plurality of (fan-shaped) pieces 200, 201, 202, 203, 204, 205, 206 and 207 in a radial manner from a reference point 301 so that each has a same centric angle (θ). Therefore, if the centric angle of each piece is θ, pieces as many as a total of (360°/θ) can be generated. Further, the coordinate of the point where the cursor is positioned on the monitor is recognized by a computer.

If the operator who monitors the object on the computer monitor moves the mouse, the cursor 300 is also moved in response to the movement of the mouse. If the operator locates the cursor at a pre-determined piece 200, 201, 202, 203, 204, 205, 206 and 207 and clicks on the cursor, a command is issued that controls the aiming direction of the security camera 40. That is, if the cursor 300 is located within a specific piece 203, the computer generates a signal for instructing a rotational movement of the security camera by panning or tilting it toward the aiming direction represented by the piece 203 and transmits a signal to a driver (mounting device) of the camera 40.

Therefore, if the operator clicks on the cursor and then drags it from a first piece 203 to a second piece 204, a command that instructs the security camera to move from the aiming direction represented by the first region 203 to the aiming direction represented by the second region 204 is transferred to a driver of the security camera via an interface such as R5422, RS485 or RS-232C, or an USB port. The driver controls the motor of the mounting device supporting the camera to change the aiming direction.

In other words, according to the present invention, there is an effect that it pans the camera as if Joystick is manipulated freely by arbitrarily moving the cursor 300 in a specific region (invisible on the screen; 200, 201, 202, 203, 204, 205, 206 and 207).

Meanwhile, if the operator locates the cursor 203 at a given piece 203, and clicks on and drags the cursor, a distance between the position of the dragged cursor and the reference point 301 is calculated. It is thus possible to control the moving speed of the camera in proportion to the calculated distance. Namely, if the operators clicks on the cursor at a given piece 203, drags out the cursor in a radial direction and then turns the mouse with a larger radius from the reference point 301, the camera can rotate more rapidly (i.e., the moving speed of the camera) than when the radius of the circle becomes reduced.

Furthermore, according to a preferred embodiment of the present invention, a command which instructs the zoom-in/out functions can be transmitted to the driver of the camera by locating the cursor 203 at the fragment region 203 and rolling the mouse wheel 401.

As such, the user can pan the camera by clicking on, dragging and moving the cursor within the predetermined regions 200, 201, 202, 203, 204, 205, 206 and 207 using the mouse 400, as if manipulating a real joystick. Furthermore, the operator can command additional operations such as zoom-in/out by pushing or pulling the mouse wheel 401, if necessary.

According to another embodiment of the present invention, the above-mentioned additional functions such as the focus function can be performed by combining the mouse and the keyboard.

Fig.4 shows a preferred embodiment of performing additional functions such as zoom-in/out in the control GUI provided within a predetermined region on a monitor in accordance with the present invention. Referring to Fig.4, additional control regions 208, 209, 210 and 211 are provided within a predetermined region.

For example, the pieces 208 and 209 are regions for receiving a command to perform camera lens zoom-in/out functions. The fragment regions 210 and 211 are regions for receiving a command to perform the focus-in/out functions.

That is, if a user locates a cursor at the fragment region 208 and then clicks on the cursor, the zoom-out function can be performed. If the user drags out the cursor, the zoom-out function can be continuously performed. If the user drags the cursor toward the fragment region 209, the zoom-in function can be performed.

Furthermore, regarding the focus-in and out functions, the strength of the focus-in and out functions can be controlled using the click and drag functions in the fragment region 210 and the fragment region 211.

According to the present invention as described above, a predetermined region is set on a computer monitor. According to the direction that a cursor is clicked on and dragged within the region, a rotary movement command to pan or tilt a camera at a remote place is generated.

If a mouse wheel is rolled or the mouse is moved in an additional control region within the predetermined region, additional functions such as zoom-in/out and focus-in/out are performed. Therefore, the present invention has an effect that a user can feel as if manipulating virtual joystick by controlling movement of a camera in real time as a mouse is moved, while monitoring an image of a subject on a computer monitor.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

## Claims

1. A method for controlling the motion of the security camera that captures and transmits images for digital video recorders having a computer with a virtual joystick wherein the motion includes the panning and tilting of the camera in order to change the aiming angle as well as the lens operation such as focus, zoom and iris control, said virtual joystick comprising a mouse cursor which is manipulated on an invisible control GUI implemented at a predefined region on the screen wherein the control GUI is divided into a plurality of fan-shaped pieces (360°/θ) around a reference point such that each has the same centric angle (θ), comprising a step of transmitting a signal that switches the camera angle from the direction corresponding to a first piece to the direction corresponding to a second piece by panning and/or tilting the mounting device if clicking on the cursor within the boundary of the first piece and dragging the cursor from territory of the first piece to that of the second piece.

2. The method as set forth in Claim 1, wherein the panning/tilting speed of the camera is controlled in proportion to the distance between the reference point and the point of the click-on.

3. The method as set forth in Claims 1 or 2, wherein the size of the mouse cursor displayed on the screen is proportional to the distance between the reference point and the point of the click-on.

4. The method as set forth in Claim 1, wherein lens control such as zoom, focus, and iris control is performed if the mouse wheel is rolled up/down at a specific camera angle if the cursor is located at a specific piece.

5. The method as set forth in Claim 1, wherein an additional control GUI region is defined from the reference point within the selected region, and the cursor is located and clicked within said additional control region, an additional function including lens control such as zoom, focus, and iris control is performed, wherein and direction of in and out of the lens control is determined by the direction where the cursor is dragged.

6. The method as set forth in Claim 1, wherein the motion of the camera is simultaneously controlled by a keyboard as well as the virtual joystick.

7. A computer, for digital video recorder having a security camera at a remote site that captures and transmits images, with a virtual joystick wherein the camera motion such the panning/tilting and lens control is controlled by said virtual joystick, said virtual joystick comprising a mouse cursor which is manipulated on an invisible control GUI implemented at a predefined region on the screen wherein the control GUI is divided into a plurality of fan-shaped pieces (360°/θ) around a reference point such that each has the same centric angle (θ), comprising a step of transmitting a signal that switches the camera angle from the direction corresponding to a first piece to the direction corresponding to a second piece by panning and/or tilting the mounting device if clicking on the cursor within the boundary of the first piece and dragging the cursor from territory of the first piece to that of the second piece and wherein the panning/tilting speed of the camera is controlled in proportion to the distance between the reference point and the point of the click-on.

8. The computer as set forth in Claim 7, wherein if the cursor is located at a selected piece, the lens control is performed by the mouse wheel.

9. The computer as set forth in Claim 7, wherein an additional control GUI region is defined from the reference point within the selected region, and the cursor is located and clicked within said additional control region, an additional function including lens control such as zoom, focus, and iris control is performed, wherein and direction of in and out of the lens control is determined by the direction where the cursor is dragged.
